Europäisches Patentamt

European Patent Office

Office européen des brevets

(19)

(11) Veröffentlichungsnummer: **0 369 049**
**A1**

(12) **EUROPÄISCHE PATENTANMELDUNG**

(21) Anmeldenummer: **88119043.3**

(22) Anmeldetag: **15.11.88**

(51) Int. Cl.⁵: **C09K 11/62, C09K 11/61, G21K 4/00**

(43) Veröffentlichungstag der Anmeldung:
**23.05.90 Patentblatt 90/21**

(84) Benannte Vertragsstaaten:
**BE DE FR IT**

(71) Anmelder: **Siemens Aktiengesellschaft**
**Wittelsbacherplatz 2**
**D-8000 München 2(DE)**

(72) Erfinder: **Brandner, Gerhard, Dipl.-chem.**
**Dr.rer.nat.**
**Grenzstrasse 32**
**D-8502 Zirndorf(DE)**
Erfinder: **Wegerer, Tanja**
**Artilleriestrasse 22**
**D-8520 Erlangen(DE)**

(54) **Speicherleuchtschirm mit einem stimulierbaren Speicherleuchtstoff.**

(57) Die Erfindung betrifft einen Speicherleuchtschirm mit einem stimulierbaren Speicherleuchtstoff für die latente Speicherung von Röntgenstrahlenbildern, bei dem die Auslesung der Röntgenstrahlenbilder durch Anregung mittels Strahlen einer ersten Wellenlänge erfolgt, worauf Licht einer zweiten Wellenlänge emittiert wird. Erfindungsgemäß ist der Speicherleuchtstoff im Bereich der beiden Wellenlängen transparent. Als Speicherleuchtstoff eignet sich ein dotierter Alkali-Halogenid-Speicherleuchtstoff, insbesondere ein mit Thallium dotiertes Rubidium-Bromid.

EP 0 369 049 A1

## Speicherleuchtschirm mit einem stimulierbaren Speicherleuchtstoff

Die Erfindung betrifft einen Speicherleucht-schirm mit einem stimulierbaren Speicherleucht-stoff für die latente Speicherung von Röntgenstrahlenbildern, bei dem die Auslesung der Röntgenstrahlenbilder durch Anregung mittels Strahlen einer ersten Wellenlänge erfolgt, worauf Licht einer zweiten Wellenlänge emittiert wird. Ein derartiger Speicherleuchtstoff ist beispielsweise aus der EP-A-0 174 875 bekannt.

Derartige Speicherleuchtstoffe werden bei Bild-aufnahmevorrichtungen verwendet, wie sie bei-spielsweise in der DE-C-23 63 995 beschrieben ist. In einer derartigen Röntgendiagnostikeinrichtung wird als strahlenempfindlicher Wandler ein Leuchtschirm aus einem Lumineszenz-Speicherleuchtstoff verwendet, der mit Röntgenstrahlen bestrahlt wird. Dadurch werden in dem Speicherleuchtstoff ent-sprechend der auftreffenden Strahlstärke Defekt-elektronen erzeugt, die in Potentialfallen (Traps) mit höherem Energieniveau gespeichert werden, so daß in dem Speicherleuchtschirm ein latentes Röntgenstrahlenbild gespeichert ist.

In einer Auslesevorrichtung wird die ganze Fläche dieses Speicherleuchtschirmes als Vorlage von einer zusätzlichen Strahlenquelle, dies kann beispielsweise ein Laser sein, bildpunktweise zum Leuchten angeregt. Durch die stimulierenden Strahlen werden die in den Traps gespeicherten Elektronen im Energieniveau angehoben und können in niedrigere Energieneveaus zurückfallen, wobei die Energiedifferenz in Form von Lichtquanten abgestrahlt wird. Dadurch emittiert der Speicherleuchtstoff Licht in Abhängigkeit von der in dem Speicherleuchtstoff gespeicherten Energie. Das auf Grund der Stimulation emittierte Licht wird detektiert und sichtbar gemacht, so daß das in dem Speicherleucht stoff derart latent gespeicherte Röntgenstrahlenbild auslesbar ist.

Als Problem zeigt sich hierbei, daß der Speicherleuchtstoff für das Laserlicht nicht ausreichend transparent ist. Um ausreichende Röntgenquantenabsorptionen erzielen zu können, benötigt man eine Mindestdicke des Speicherleuchtstoffes. Im Falle eines nichttransparenten, dicht gepreßten oder gesinterten Leuchtstoffes wird der Laserstrahl durch den Leuchtstoff so stark geschwächt, daß die Eindringtiefe des Laserstrahles zu gering ist. Da die Energie nicht mehr ausreicht, die Defektelektronen auf das für die Rekombination erforderliche Energieniveau anzuheben, können die in den tieferen Schichten gespeicherten Informationen nicht mehr ausgelesen werden.

In der EP-A-0 174 875 ist ein Speicherleuchtschirm beschrieben, bei dem die Leuchtstoffkörner des Speicherleuchtstoffes von einem Binder umhüllt auf eine Unterlage aufgebracht werden. Der Binder dient dabei zum Fixieren der Leuchtstoffkörner. Als Binder wird üblicherweise ein lichtdurchlässiges Trägermaterial verwendet, das sowohl für das anregende Laserlicht als auch für das emittierte Lumineszenzlicht transparent ist. Hierbei tritt aber das Problem auf, daß durch Streuung an den Leuchtstoffkörnern der Laserstrahl mit anwachsender Eindringtiefe immer breiter wird, so daß sich die Modulationsübertragungsfunktion des gesamten Systems verschlechtert. Auch weist ein Speicherleuchtschirm in der Bindertechnik bei vergleichbarer Schichtdicke des Speicherleuchtstoffes eine geringere Röntgenquantenabsorption auf.

Die Erfindung geht von der Aufgabe aus, einen Speicherleuchtschirm der eingangs genannten Art zu schaffen, der eine hohe Röntgenquantenabsorption bei hoher Abbildungsschärfe und guter Modulationsübertragungsfunktion aufweist.

Die Aufgabe wird erfindungsgemäß dadurch gelöst, daß der Spei cherleuchtstoff transparent ist. Dadurch ist es nicht erforderlich, den Speicherleuchtstoff zusammen mit einem Binder auf den Träger aufzubringen. Dadurch ergibt sich bei gleicher Röntgenquantenabsorption eine geringere Schichtdicke, so daß der Abtaststrahl auch bei großer Eindringtiefe noch ungeschwächt ist. Außerdem ist das Material optisch isotrop und homogen. Insbesondere weist es über die gesamte Schichtdicke keine Änderungen des Brechungsindex auf. Durch diese Maßnahmen wird bewirkt, daß der Strahl nur eine geringe Aufweitung erfährt, so daß die Schärfe und somit die Modulationsübertragungsfunktion sich erheblich verbessert.

Es hat sich als vorteilhaft erwiesen, wenn der Speicherleuchtstoff im Bereich der ersten Wellenlänge und der zweiten Wellenlänge transparent ist. Als Speicherleuchtstoff findet vorzugsweise ein do-tierter Alkalihalogenid-Speicherleuchtstoff, insbe-sondere ein mit Thallium dotierter Rubidium-Bromid-Speicherleuchtstoff, Verwendung.

Der erfindungsgemäße Speicherleuchtstoff läßt sich vorzugsweise herstellen, wenn er im Hochvakuum aufgedampft wird und anschließend unter einer Schutzgasatmosphäre bis auf Temperaturen kurz unter dem Schmelzpunkt des Speicherleuchtstoffes nachgetempert wird. Die Eigenschaften des Speicherleuchtstoffes lassen sich auch dadurch erzielen, wenn der Speicherleuchtstoff gepreßt wird, wobei dies auch unter Erwärmung und/oder im Vakuum erfolgen kann. Dabei hat es sich als vorteilhaft erwiesen, wenn der Speicherleuchtstoff im Vakuum auf $100^\circ$ bis $400^\circ$ C unter einem ersten Druck von beispielsweise 5 bis 10 MPa erhitzt wird und bei Erreichen der Temperatur der Druck kurzzeitig auf einen zweiten Druck von beispielsweise 300 bis 3.000 MPa, vorzugsweise 1.000 MPa, erhöht wird.

Zur Herstellung eines Speicherleuchtschirmes mit einer Schicht des erfindungsgemäßen Speicherleuchtstoffes wird das Ausgangsmaterial durch Aufdampfen im Hochvakuum auf einem Träger aufge tragen. Als Ausgangsmaterialien eignen sich besonders Alkali-Halogenide, insbesondere mit Thallium-Bromid dotiertes Rubidium-Bromid (RbBr:T1). Anschließend wird der Speicherleuchtschirm unter Schutzgasatmosphäre bis auf Temperaturen kurz unter dem Schmelzpunkt des Speicherleuchtstoffes nachgetempert. Dadurch erhält man einen, dichten, binderfreien und gleichzeitig für Licht im Wellenlängenbereich zwischen 380 nm und 780 nm transparenten Speicherleuchtstoff.

Ein erfindungsgemäßer Speicherleuchtschirm läßt sich aber auch durch Pressen eines dotierten Alkali-Halogenides herstellen. Das kann sowohl unter Erwärmen, als auch im Vakuum, als auch unter Erwärmen im Vakuum geschehen. Speicherleuchtschirme mit für optisches Licht transparenten Speicherleuchtstoffschichten sind auch in Dicken von größer als 500 μm herstellbar, wenn mit Thallium-Bromid dotiertes Rubidium-Bromid in einer evakuierbaren Preßform auf 100° bis 400° C unter Vakuum bei einem Druck von etwa 5 bis 10 MPa erhitzt wird. Sobald die gewünschte Temperatur erreicht ist, erhöht man den Druck auf 300 bis 3.000 MPa, vorzugsweise 1.000 MPa, für einige Minuten. Der so erhaltene transparente Preßling ist hygroskopisch und muß deshalb vor Feuchtigkeit geschützt werden. Dies kann durch Auftragen einer transparenten Schutzschicht auf der Schicht des Speicherleuchtstoffes erfolgen.

Durch diese Herstellungverfahren erhält man einen Speicherleuchtstoff, bei dem ein durchgehendes, nicht unbedingt fehlerfrei monokristallines Kristallgitter entsteht. Dabei ist entscheidend, daß die Alkali-Halognid-Einkristalle im Wellenlängenbereich des sichtbaren Lichtes transparent sind. Weiterhin treten über die gesamte Schichtdicke keine Grenzflächen auf, an denen sich der Brechungsindex ändert. Derartige Grenzflächen, die zu Streuungen und zu somit Qualitätseinbußen führen, ergeben sich beispielsweise bei Lufteinschlüssen.

## Ansprüche

1. Speicherleuchtschirm mit einem stimulierbaren Speicherleuchtstoff für die latente Speicherung von Röntgenstrahlenbildern, bei dem die Auslesung der Röntgenstrahlenbilder durch Anregung mittels Strahlen einer ersten Wellenlänge erfolgt, worauf Licht einer zweiten Wellenlänge emittiert wird, **dadurch gekennzeichnet**, daß der Speicherleuchtstoff transparent ist.

2. Speicherleuchtschirm nach Anspruch 1, **dadurch gekennzeichnet**, daß der Speicherleuchtstoff im Bereich der ersten Wellenlänge und der zweiten Wellenlänge transparent ist.

3. Speicherleuchtschirm nach Anspruch 1 oder 2, **dadurch gekennzeichnet**, daß der Speicherleuchtstoff ein mit einem oder mehreren Lanthaniden dotierter Alkalihalogenid-Speicherleuchtstoff ist.

4. Speicherleuchtschirm nach einem der Ansprüche 1 bis 3, **dadurch gekennzeichnet**, daß der Speicherleuchtstoff mit Thallium dotiertes Rubidium-Bromid aufweist.

5. Verfahren zur Herstellung eines Speicherleuchtstoffes zur Verwendung in einem Speicherleuchtschirm nach einem der Patentansprüche 1 bis 4, **dadurch gekennzeichnet**, daß der Speicherleuchtstoff im Hochvakuum aufgedampft wird und anschließend unter einer Schutzgasatmosphäre bis auf Temperaturen kurz unter dem Schmelzpunkt des Speicherleuchtstoffes nachgetempert wird.

6. Verfahren zur Herstellung eines Speicherleuchtstoffes zur Verwendung in einem Speicherleuchtschirm nach einem der Ansprüche 1 bis 5, **dadurch gekennzeichnet**, daß der Speicherleuchtstoff gepreßt wird.

7. Verfahren zur Herstellung eines Speicherleuchtstoffes zur Verwendung in einem Speicherleuchtschirm nach einem der Ansprüche 1 bis 6, **dadurch gekennzeichnet**, daß unter Erwärmung gepreßt wird.

8. Verfahren zur Herstellung eines Speicherleuchtstoffes zur Verwendung in einem Speicherleuchtschirm nach einem der Ansprüche 1 bis 7, **dadurch gekennzeichnet**, daß im Vakuum gepreßt wird.

9. Verfahren nach Anspruch 6, **dadurch gekennzeichnet**, daß der Speicherleuchtstoff im Vakuum auf 100° bis 400° C unter einem ersten Druck erhitzt wird und bei Erreichen der Temperatur der Druck kurzzeitig auf einen zweiten Druck erhöht wird.

10. Verfahren nach Anspruch 9, **dadurch gekennzeichnet**, daß der erste Druck 5 bis 10 MPa und der zweite Druck 300 bis 3.000 MPa, vorzugsweise 1.000 MPa, beträgt.

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.5) |
|---|---|---|---|
| X | FR-A-2 301 088 (SIEMENS) <br> * Insgesamt * <br> --- | 1-10 | C 09 K 11/62 <br> C 09 K 11/61 <br> G 21 K 4/00 |
| Y | PATENT ABSTRACTS OF JAPAN, Band 12, Nr. 70 (C-479)[2917], 4. März 1988; & JP-A-62 209 188 (KONISHIROKU PHOTO IND. CO. LTD) 14-09-1987 <br> * Zusammenfassung * <br> --- | 1,3,4 | |
| Y | PATENT ABSTRACTS OF JAPAN, Band 12, Nr. 75 (C-480)[2922], 9. März 1988; & JP-A-62 212 491 (KONISHIROKU PHOTO IND. CO. LTD) 18-09-1987 <br> * Zusammenfassung * <br> ----- | 1,3,4 | |

| | RECHERCHIERTE SACHGEBIETE (Int. Cl.5) |
|---|---|
| | C 09 K 11/00 <br> G 21 K 4/00 |

Der vorliegende Recherchenbericht wurde für alle Patentansprüche erstellt

| Recherchenort | Abschlußdatum der Recherche | Prüfer |
|---|---|---|
| DEN HAAG | 11-07-1989 | DROUOT M.C. |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus andern Gründen angeführtes Dokument
...............................................................................
& : Mitglied der gleichen Patentfamilie, übereinstimmendes Dokument